# FASCICULE DE BREVET EUROPEEN

(11) **EP 2 435 304 B1**
(45) Date de publication et mention de la délivrance du brevet: **09.10.2013**
(21) Numéro de dépôt: 10723696.0
(22) Date de dépôt: 19.04.2010
(51) Int. Cl.: B64C 11/30, B64C 11/34, F01D 7/00, F02K 3/02, F04D 29/36

(54) **DISPOSITIF POUR LA COMMANDE DE L'ORIENTATION DES PALES DE SOUFFLANTE D'UN TURBOPROPULSEUR**
VORRICHTUNG ZUR BLATTVERSTELLUNG DES FANS EINES TURBOFAN-TRIEBWERKS
DEVICE FOR CHANGING THE FAN BLADE PITCH OF A TURBOFAN ENGINE

(30) Priorité: 29.05.2009 FR 0953591
(43) Date de publication de la demande: 04.04.2012
(73) Titulaire: Snecma, 75015 Paris (FR)
(72) Inventeur: BALK, Wouter, 77000 Melun (FR); CHARIER, Gilles, Alain, 77130 La Grande Paroisse (FR); GALLET, François, 75012 Paris (FR)
(74) Mandataire: Boura, Olivier
(86) Numéro de dépôt international: PCT/FR2010/050743
(87) Numéro de publication internationale: WO 2010/136686

(56) Documents cités:
- GB-A- 2 155 110
- GB-A- 2 182 727
- US-A- 3 869 221
- US-A- 4 657 484

## Description

### Arrière-plan de l'invention

La présente invention se rapporte au domaine général des turbopropulseurs comportant au moins un ensemble de pales de soufflante à orientation réglable. Elle concerne plus particulièrement la commande d'orientation des pales de soufflante d'un turbopropulseur d'avion à double hélice.

De façon connue, un turbopropulseur d'avion à double hélice comprend une turbine à deux rotors contrarotatifs entraînant chacun un ensemble de pales de soufflante non carénées. On pourra par exemple se référer au document GB 2,129,502 qui décrit différents modes de réalisation d'un tel turbopropulseur.

Dans ce type de turbopropulseur, l'orientation des pales de soufflante de chaque ensemble (on parle également de réglage du pas) constitue l'un des paramètres permettant de gérer la poussée du turbopropulseur. A cet effet, l'une des solutions connues pour commander l'orientation des pales de soufflante d'un même ensemble consiste à utiliser un renvoi de commande de calage qui est réalisé par l'intermédiaire d'arbres radiaux actionnés par des vérins situés au centre du turbopropulseur.

Bien qu'efficace, une telle solution présente toutefois l'inconvénient d'être particulièrement complexe à réaliser puisqu'elle nécessite l'utilisation de très nombreux engrenages. Par ailleurs, ce type de commande requiert d'avoir des arbres radiaux à fort diamètre pour éviter les problèmes de torsion auxquels ils sont soumis. Or, de tels arbres engendrent un maître couple important ce qui entraîne une obstruction supplémentaire dans la veine aérodynamique et provoque ainsi une perte de rendement.

US-A-4 657 484 décrit un dispositif de commande selon le préambule de la revendication 1.

### Objet et résumé de l'invention

La présente invention a donc pour but principal de pallier de tels inconvénients en proposant une commande de l'orientation des pales de soufflante ne nécessitant pas le recours à des arbres travaillant en torsion.

Ce but est atteint grâce à un dispositif selon la revendication 1.

Le dispositif de commande selon l'invention présente l'avantage que les bras de liaison travaillent en traction et non en torsion de sorte que les biellettes qui les constituent peuvent être de diamètre réduit. Par ailleurs, ce dispositif de commande est dépourvu d'engrenages. Il en résulte une commande fiable, précise et de masse réduite.

Par ailleurs, le vérin du dispositif de commande selon l'invention est fixe en rotation avec tous les avantages que cela présente en termes de fiabilité. En effet, la tige du vérin est reliée à une cage d'un palier à roulement qui est montée sur un carter de turbine.

De préférence, la cage interne du palier à roulement est apte à coulisser longitudinalement sur le carter de turbine par l'intermédiaire de cannelures.

La biellette radiale de chaque bras de liaison peut être guidée radialement par des paliers étanches.

Avantageusement, le dispositif de commande comporte en outre des moyens pour donner une orientation prédéterminée aux pales de soufflante en cas de défaillance du vérin.

Avantageusement encore, chaque bras de liaison du dispositif de commande traverse radialement un bras de carter du turbopropulseur.

Les bras de liaison peuvent être régulièrement répartis autour de l'axe longitudinal. Enfin, l'ensemble peut comprendre dix pales de soufflante et le vérin être lié mécaniquement à l'anneau de synchronisation au moyen de cinq bras de liaison.

L'invention concerne également un turbopropulseur à double hélice, comportant une turbine à deux rotors contrarotatifs et deux ensembles de pales de soufflante à orientation réglable solidaires en rotation de deux anneaux rotatifs respectivement liés aux rotors, la commande de l'orientation des pales de soufflante d'au moins l'un des ensembles étant réalisée par un dispositif de commande tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe longitudinale d'un turbopropulseur à double hélice muni d'un dispositif de commande de l'orientation des hélices selon l'invention ;
- la figure 2 est une vue agrandie de la figure 1 montrant la commande de l'orientation des hélices de l'ensemble amont ;
- la figure 3 est une vue agrandie de la figure 1 montrant la commande de l'orientation des hélices de l'ensemble aval ; et
- la figure 4 est une vue de face d'une partie du dispositif de commande des figures 2 et 3.

### Description détaillée d'un mode de réalisation

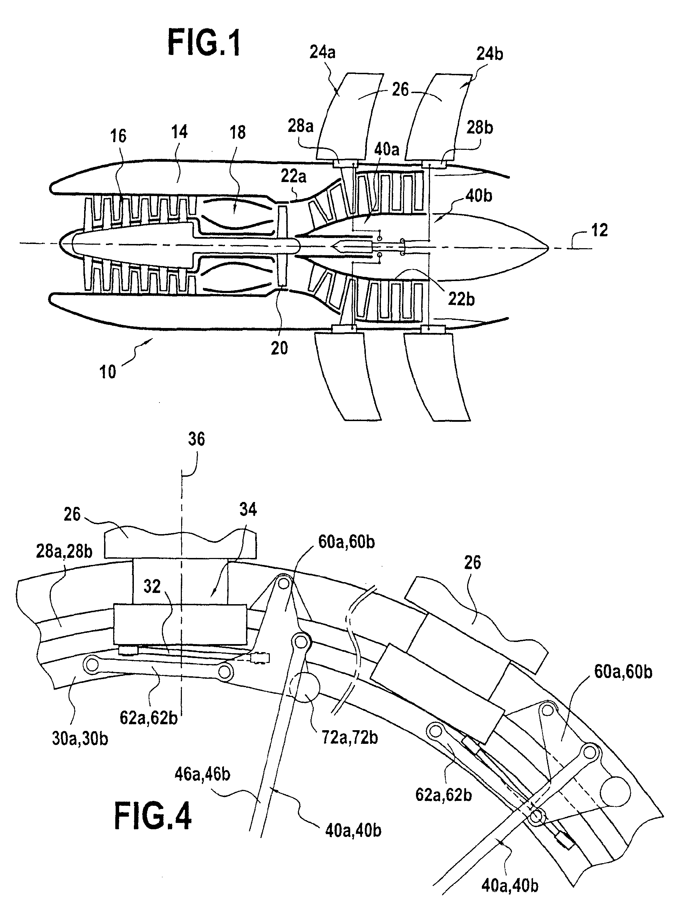

La figure 1 représente de façon très schématique un exemple de réalisation d'un turbopropulseur d'avion du type à double hélice.

Un tel turbopropulseur est connu et ne sera donc pas décrit en détails. Le turbopropulseur 10 comprend notamment un axe longitudinal 12 et une nacelle annulaire 14 disposée coaxialement autour de l'axe longitudinal. Le turbopropulseur 10 comprend en outre, d'amont en aval, un compresseur 16, une chambre de combustion 18 et une turbine 20 à deux rotors contrarotatifs 22a, 22b, ces différents éléments étant également disposés coaxialement autour de l'axe longitudinal 12 du turbopropulseur.

Le turbopropulseur 10 comprend encore un ensemble amont (ou avant) 24a et un ensemble aval (ou arrière) 24b de pales de soufflante 26 à orientation réglable. Les pales de soufflante 26 de chaque ensemble 24a, 24b sont plus précisément montées sur un anneau rotatif 28a, 28b en forme de plate-forme annulaire centrée sur l'axe longitudinal 12 du turbopropulseur.

Les pales de soufflante 26 de chaque ensemble sont par ailleurs régulièrement espacées circonférentiellement et s'étendent radialement depuis la surface de l'anneau rotatif respectif 28a, 28b. Chaque rotor 22a, 22b de la turbine 20 porte et entraîne en rotation l'un des anneaux rotatifs 28a, 28b sur lequel est monté l'un des ensembles 24a, 24b de pales de soufflante à orientation réglable.

Le turbopropulseur comprend également un dispositif pour la commande de l'orientation des pales de soufflante de chaque ensemble 24a, 24b. Le dispositif de commande selon l'invention permet de régler l'orientation des pales de soufflante à la fois de l'ensemble amont 24a et de l'ensemble aval 24b. Il pourrait toutefois être utilisé pour la commande de l'orientation des pales d'un seul de ces ensembles.

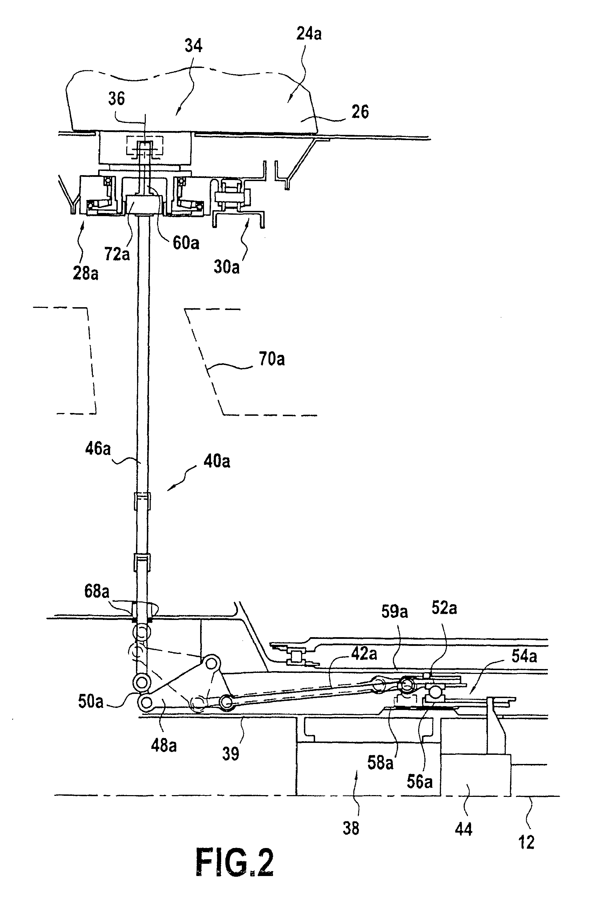

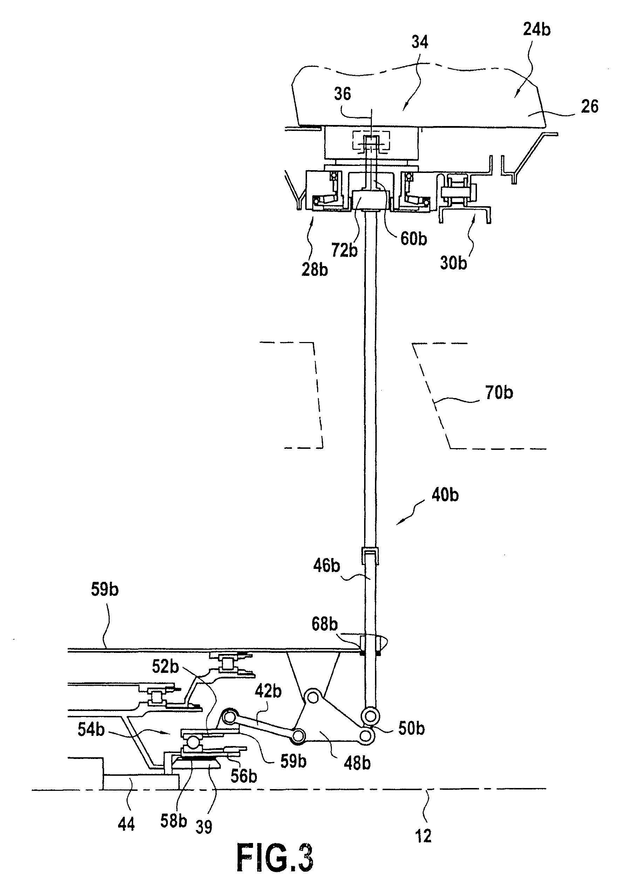

Comme représenté de façon plus précise sur les figures 2 et 3, le dispositif de commande selon l'invention comporte, pour chaque ensemble 24a, 24b, un anneau de synchronisation 30a, 30b qui est centré sur l'axe longitudinal 12 du turbopropulseur et qui est disposé coaxialement à l'anneau rotatif respectif 28a, 28b, celui-ci présentant communément une forme de polygone.

Par ailleurs, comme représenté sur la figure 4, chaque anneau de synchronisation 30a, 30b est relié par l'intermédiaire d'une pluralité de bielles d'entraînement 32 articulés à leurs deux extrémités à des supports 34 de pied de pale qui sont montés pivotant sur l'anneau rotatif respectif 28a, 28b. De façon connue, chaque support 34 reçoit le pied d'une pale 26, par exemple au moyen d'une attache en forme de queue d'aronde, et est fixé pivotant autour d'un axe radial 36 sur l'anneau rotatif au moyen par exemple d'un palier à roulement à billes.

De la sorte, une rotation de chaque anneau de synchronisation 30a, 30b autour de l'axe longitudinal 12 du turbopropulseur (dans un sens ou dans l'autre) entraîne une rotation de chaque support 34 de pied de pale autour de leur axe radial 36 respectif (par l'intermédiaire des bielles d'entraînement 32), ce qui a pour effet de changer l'orientation des pales 26 montées sur ces supports.

Le dispositif de commande selon l'invention comporte également un vérin 38 (de type hydraulique, pneumatique ou électrique) qui est centré sur l'axe longitudinal 12 et fixé sur un carter de turbine 39. Le vérin est donc fixe.

Le vérin 38 est par ailleurs lié mécaniquement aux anneaux de synchronisation 30a, 30b au moyen d'une pluralité de bras de liaison 40a, 40b pour entraîner en rotation ces anneaux de synchronisation autour de l'axe longitudinal 12.

En liaison avec les figures 2 et 4, on décrira d'abord les bras de liaison 40a reliant le vérin 38 à l'anneau de synchronisation 30a de l'ensemble amont 24a.

Chaque bras de liaison 40a comprend une biellette axiale 42a qui est reliée à la tige 44 du vérin 38, une biellette radiale 46a qui est reliée à l'anneau de synchronisation 30a et un guignol de renvoi d'angle 48a qui relie la biellette axiale à la biellette radiale. Chaque bras de liaison comprend encore une biellette de renvoi 50a qui est intercalée entre le guignol de renvoi d'angle 48a et la biellette radiale 46a.

De façon plus précise, la biellette axiale 42a de chaque bras de liaison 40a est reliée à la cage externe 52a d'un palier à roulement 54a. La cage interne 56a de ce dernier est montée sur le carter de turbine 39 par l'intermédiaire de cannelures 58a et reliée à la tige 44 du vérin 38. Ce palier à roulement 54a supporte en rotation un arbre 59a du rotor 22a entraînant en rotation l'ensemble amont 24a et permet ainsi la transmission d'un mouvement de translation de la tige 44 du vérin d'un repère fixe (le carter de turbine 39) à un repère tournant (le rotor 22a). Par ailleurs, le guignol de renvoi d'angle 48a de chaque bras de liaison 40a est fixé de façon pivotante sur cet arbre 59a.

Avec un tel arrangement, on comprend aisément qu'un actionnement du vérin 38 va provoquer un déplacement longitudinal du palier à roulement 54a par coulissement de sa cage interne 56a sur le carter de turbine 39. La biellette axiale 42a de chaque bras de liaison étant reliée à la cage externe de ce palier à roulement, elle va également se déplacer le long de l'axe longitudinal 12, faisant ainsi basculer le guignol de renvoi d'angle 48a autour de son point de fixation sur l'arbre 59a du rotor 22a. Par l'intermédiaire de la biellette de renvoi 50a, le basculement du guignol de renvoi d'angle 48a autour de son point de fixation va alors provoquer un déplacement de la biellette radiale 46a selon une direction sensiblement radiale. Cette cinématique est d'ailleurs illustrée sur la figure 2 où les deux positions extrêmes des différents éléments des bras de liaison 40a sont représentées en traits pleins et en traits pointillés.

Le dispositif de commande selon l'invention comporte encore des moyens pour convertir ce déplacement de la biellette radiale 46a des bras de liaison 40a en une rotation de l'anneau de synchronisation 30a autour de l'axe longitudinal 12.

A cet effet, comme représenté sur la figure 4, chaque bras de liaison 40a comprend en outre un autre guignol de renvoi d'angle 60a qui est fixé de façon pivotante sur l'anneau rotatif 28a et qui est relié, d'une part à la biellette radiale 46a, et d'autre part à une biellette tangentielle 62a, cette dernière étant fixée à l'anneau de synchronisation 30a. De la sorte, un déplacement de la biellette radiale selon une direction sensiblement radiale va entraîner un basculement du guignol de renvoi d'angle 60a autour de son point de fixation sur l'anneau rotatif, ce qui aura pour effet de déplacer la biellette tangentielle selon une direction sensiblement tangentielle. Il résulte de ce déplacement une mise en rotation (dans un sens ou dans l'autre) de l'anneau de synchronisation 30a autour de l'axe longitudinal. Cette cinématique est représentée sur la figure 4 où les deux positions extrêmes des différents éléments de cette conversion sont représentées côte à côte.

En liaison avec les figures 3 et 4, on décrira maintenant les bras de liaison 40b reliant le vérin 38 à l'anneau de synchronisation 30b de l'ensemble aval 24b.

Comme pour la commande de l'orientation des pales de l'ensemble amont, chaque bras de liaison 40b comprend ici une biellette axiale 42b, une biellette radiale 46b qui est reliée à l'anneau de synchronisation 30b, un guignol de renvoi d'angle 48b qui relie la biellette axiale à la biellette radiale, et une biellette de renvoi 50b.

La biellette axiale 42b de chaque bras de liaison est plus précisément reliée à la cage externe 52b d'un palier à roulement 54b. La cage interne 56b de ce dernier est montée sur l'extrémité aval du carter de turbine 39 par l'intermédiaire de cannelures 58b. Elle est en outre reliée à la tige 44 du vérin 38.

Ce palier à roulement 54b supporte en rotation un arbre 59b du rotor 22b entraînant en rotation l'ensemble aval 24b et permet ainsi la transmission d'un mouvement de translation de la tige 44 du vérin d'un repère fixe (le carter de turbine 39) à un repère tournant (le rotor 22b). Par ailleurs, le guignol de renvoi d'angle 48b de chaque bras de liaison 40b est fixé de façon pivotante sur cet arbre 59b.

On comprend qu'un actionnement du vérin va ainsi provoquer un déplacement longitudinal de la biellette axiale 42b qui va faire basculer le guignol de renvoi d'angle 48b autour de son point de fixation sur l'arbre 59b. Le basculement du guignol de renvoi d'angle 48b va alors provoquer un déplacement de la biellette radiale 46b selon une direction sensiblement radiale.

Enfin, la conversion du déplacement de la biellette radiale 46b des bras de liaison 40b en une rotation de l'anneau de synchronisation 30b autour de l'axe longitudinal 12 est réalisée de façon similaire à celle décrite en liaison avec la figure 4. Comme représenté sur cette figure, chaque bras de liaison 40b comprend à cet effet un autre guignol de renvoi d'angle 60b qui est fixé de façon pivotante sur l'anneau rotatif 28b et qui est relié, d'une part à la biellette radiale 46b, et d'autre part à une biellette tangentielle 62b, cette dernière étant fixée à l'anneau de synchronisation 30b. La cinématique est alors identique à celle décrite précédemment pour l'actionnement de l'ensemble amont.

On décrira maintenant des caractéristiques communes à la commande de l'orientation des pales de l'ensemble amont et de l'ensemble aval.

Les bras de liaison 40a, 40b traversant des enceintes à huile, la biellette radiale 46a, 46b de ces bras est guidée radialement à son extrémité inférieure par des paliers étanches 68a, 68b. En outre, ces mêmes biellettes radiales 46a, 46b traversent radialement chacune un bras de carter 70a, 70b du turbopropulseur.

Par ailleurs, selon une caractéristique particulièrement avantageuse de l'invention commune à la commande de l'orientation des pales de l'ensemble amont et de l'ensemble aval, le dispositif de commande comprend en outre des moyens pour donner une orientation prédéterminée aux pales en cas de défaillance du vérin.

Comme représenté sur la figure 4, ces moyens sont réalisés par des masselottes 72a, 72b formant contrepoids. Ces masselottes 72a, 72b sont solidaires des guignols de renvoi d'angle 60a, 60b et ont une masse qui est calculée de façon à assurer un effort de traction sur les biellettes radiales 46a, 46b.

Ainsi, en cas de défaillance du vérin 38, la force centrifuge induite par la masse des biellettes radiales 46a, 46b et de ces masselottes 72a, 72b va avoir tendance à faire pivoter le guignol de renvoi d'angle 60a, 60b autour de son point de fixation pour « ramener » l'anneau de synchronisation 30a, 30b dans une position prédéterminée. Par exemple, cette position prédéterminée peut correspondre à une mise en drapeau des pales 26 de soufflante.

Par ailleurs, les figures représentent un exemple de configuration de turbopropulseur dans lequel l'ensemble de pales sur lequel est positionné le dispositif de commande selon l'invention comporte dix pales de soufflante 26. Dans une telle configuration, cinq bras de liaison 40a, 40b régulièrement répartis autour de l'axe longitudinal 12 du turbopropulseur peuvent permettre d'assurer le pivotement des anneaux de synchronisation 30a, 30b (ceux-ci ayant alors une forme de décagone).

Enfin, l'invention a été décrite ci-dessus en liaison avec un turbopropulseur ayant une turbine contrarotative liée directement aux hélices. Bien entendu, l'invention s'applique également aux turbopropulseurs à double hélice dont les hélices sont entraînées par un réducteur à engrenages planétaires.

## Revendications

1. Dispositif de commande de l'orientation des pales de soufflante d'un turbopropulseur, comprenant au moins un ensemble (24a, 24b) de pales (26) de soufflante à orientation réglable, ledit ensemble étant solidaire en rotation d'un anneau rotatif (28a, 28b) centré sur un axe longitudinal (12) et lié mécaniquement à un rotor (22a, 22b) de turbine (20), chaque pale de l'ensemble étant couplée, pour le réglage de son orientation, à un anneau de synchronisation (30a, 30b) centré sur l'axe longitudinal, ledit ensemble comprenant un palier à roulement (54a, 54b) ayant une cage interne (56a, 56b) qui est montée coulissante sur un carter de turbine et qui est reliée à la tige (44) d'un vérin (38) centré sur l'axe longitudinal, et une cage externe (52a, 52b) qui est liée mécaniquement à l'anneau de synchronisation,
**caractérisé en ce que** l'ensemble de pales de soufflante comprend en outre une pluralité de bras de liaison (40a, 40b) comportant chacun une biellette axiale (42a, 42b) reliée à la cage externe du palier à roulement, une biellette radiale (46a, 46b) et un guignol de renvoi d'angle (48a, 48b) reliant la biellette axiale à la biellette radiale, et un autre guignol de renvoi d'angle (60a, 60b) solidaire de l'anneau rotatif (28a, 28b) et relié d'une part à la biellette radiale et d'autre part à une biellette tangentielle (62a, 62b) fixée sur l'anneau de synchronisation de telle manière qu'un actionnement du vérin entraîne un déplacement en rotation de l'anneau de synchronisation autour de l'axe longitudinal.

2. Dispositif selon la revendication 1, dans lequel la cage interne (56a, 56b) du palier à roulement (54a, 54b) est apte à coulisser longitudinalement sur le carter de turbine par l'intermédiaire de cannelures (58a, 58b).

3. Dispositif selon l'une des revendications 1 et 2, dans lequel la biellette radiale (46a, 46b) de chaque bras de liaison (40a, 40b) est guidée radialement par des paliers étanches (68a, 68b).

4. Dispositif selon l'une quelconque des revendications 1 à 3, comportant en outre des moyens (72a, 72b) pour donner une orientation prédéterminée aux pales (26) de soufflante en cas de défaillance du vérin (38).

5. Dispositif selon l'une quelconque des revendications 1 à 4, dans lequel chaque bras de liaison (40a, 40b) traverse radialement un bras de carter (70a, 70b) du turbopropulseur.

6. Dispositif selon l'une quelconque des revendications 1 à 5, dans lequel les bras de liaison (40a, 40b) sont régulièrement répartis autour de l'axe longitudinal (12).

7. Dispositif selon l'une quelconque des revendications 1 à 6, dans lequel l'ensemble (24a, 24b) comprend dix pales (26) de soufflante et le vérin (38) est lié mécaniquement à l'anneau de synchronisation au moyen de cinq bras de liaison (40a, 40b).

8. Turbopropulseur à double hélice, comportant une turbine (20) à deux rotors (22a, 22b) contrarotatifs et deux ensembles (24a, 24b) de pales (26) de soufflante à orientation réglable solidaires en rotation de deux anneaux rotatifs (28a, 28b) respectivement liés aux rotors, la commande de l'orientation des pales de soufflante d'au moins l'un des ensembles étant réalisée par un dispositif selon l'une quelconque des revendications 1 à 7.

## Patentansprüche

1. Vorrichtung zur Steuerung der Ausrichtung der Gebläseschaufeln eines Turboprop-Triebwerks, umfassend wenigstens eine Anordnung (24a, 24b) von Gebläseschaufeln (26) mit einstellbarer Ausrichtung, wobei die Anordnung mit einem Drehring (28a, 28b), der um eine Längsachse (12) zentriert und mit einem Rotor (22a, 22b) einer Turbine (20) mechanisch verbunden ist, drehfest verbunden ist, wobei jede Schaufel der Anordnung zur Einstellung ihrer Ausrichtung mit einem um die Längsachse zentrierten Synchronisationsring (30a, 30b) gekoppelt ist, wobei die Anordnung ein Wälzlager (54a, 54b) umfaßt, das einen Innenkäfig (56a, 56b), welcher an einem Turbinengehäuse verschieblich angebracht ist und welcher mit der Stange (44) eines um die Längsachse zentrierten Zylinders (38) verbunden ist, sowie einen Außenkäfig (52a, 52b), welcher mit dem Synchronisationsring mechanisch verbunden ist, aufweist,
**dadurch gekennzeichnet, daß** die Anordnung von Gebläseschaufeln ferner eine Vielzahl von Verbindungsarmen (40a, 40b) umfaßt, die jeweils einen axialen Hebel (42a, 42b), welcher mit dem Außenkäfig des Wälzlagers verbunden ist, einen radialen Hebel (46a, 46b) sowie einen Winkelhebel (48a, 48b), welcher den axialen Hebel mit dem radialen Hebel verbindet, und einen weiteren Winkelhebel (60a, 60b) umfassen, welcher mit dem Drehring (28a, 28b) fest verbunden und einerseits mit dem radialen Hebel und andererseits mit einem tangentialen Hebel (62a, 62b), der an dem Synchronisationsring befestigt ist, verbunden ist, derart, daß eine Betätigung des Zylinders zu einer Drehbewegung des Synchronisationsrings um die Längsachse führt.

2. Vorrichtung nach Anspruch 1, wobei der Innenkäfig (56a, 56b) des Wälzlagers (54a, 54b) geeignet ist, an dem Turbinengehäuse mittels Rillen (58a, 58b) in Längsrichtung zu gleiten.

3. Vorrichtung nach einem der Ansprüche 1 und 2, wobei der radiale Hebel (46a, 46b) eines jeden Verbindungsarms (40a, 40b) über dichte Lager (68a, 68b) radial geführt ist.

4. Vorrichtung nach einem der Ansprüche 1 bis 3, ferner umfassend Mittel (72a, 72b), um bei einem Ausfall des Zylinders (38) den Gebläseschaufeln (26) eine vorbestimmte Ausrichtung zu verleihen.

5. Vorrichtung nach einem der Ansprüche 1 bis 4, wobei jeder Verbindungsarm (40a, 40b) einen Gehäusearm (70a, 70b) des Turboprop-Triebwerks radial durchgreift.

6. Vorrichtung nach einem der Ansprüche 1 bis 5, wobei die Verbindungsarme (40a, 40b) um die Längsachse (12) gleichmäßig verteilt sind.

7. Vorrichtung nach einem der Ansprüche 1 bis 6, wobei die Anordnung (24a, 24b) zehn Gebläseschaufeln (26) umfaßt und der Zylinder (38) mittels fünf Verbindungsarmen (40a, 40b) mit dem Synchronisationsring mechanisch verbunden ist.

8. Turboprop-Triebwerk mit Doppelpropeller, umfassend eine Turbine (20) mit zwei gegenläufigen Rotoren (22a, 22b) sowie zwei Anordnungen (24a, 24b) von Gebläseschaufeln (26) mit einstellbarer Ausrichtung, die mit zwei jeweils mit den Rotoren verbundenen Drehringen (28a, 28b) drehfest verbunden sind, wobei die Steuerung der Ausrichtung der Gebläseschaufeln von wenigstens einer der Anordnungen durch eine Vorrichtung nach einem der Ansprüche 1 bis 7 vollzogen wird.

## Claims

1. A device for controlling the pitch of the fan blades of a turboprop having at least one set (24a, 24b) of adjustable-pitch fan blades (26), said set being secured to rotate with a rotary ring (28a, 28b) centered on a longitudinal axis (12) and mechanically connected to a turbine rotor (22a, 22b), each blade of the set being coupled for pitch adjustment to a synchronization ring (30a, 30b) centered on the longitudinal axis, said set comprising a rolling bearing (54a, 54b) having an inner cage (56a, 56b) slidably mounted on a turbine casing and connected to the rod (44) of an actuator (38) centered on the longitudinal axis, and an outer cage (52a, 52b) that is mechanically connected to the synchronization ring,
**characterized in that** the set of fan blades further comprises a plurality of connection arms (40a, 40b)each comprising an axial link (42a, 42b) connected to the outer cage of the rolling bearing, a radial link (46a, 46b)and a bellcrank (48a, 48b) connecting the axial link to the radial link, and another bellcrank (60a, 60b) secured to the rotary ring (28a, 28b) and connected firstly to the radial link and secondly to a tangential link (62a, 62b) fastened to the synchronization ring in such a manner that actuating the actuator causes the synchronization ring to move in turning about the longitudinal axis.

2. A device according to claim 1, wherein the inner cage (56a, 56b) of the rolling bearing (54a, 54b) is suitable for sliding longitudinally on the turbine casing by means of fluting (58a, 58b).

3. A device according to claim 1 or 2, wherein the radial link (46a, 46b) of each connection arm (40a, 40b) is guided radially by leaktight bearings (68a, 68b).

4. A device according to any one of claims 1 to 3, further including means (72a, 72b) for imparting a predetermined pitch to the fan blades (26) in the event of the actuator (38) failing.

5. A device according to any one of claims 1 to 4, wherein each connection arm (40a, 40b) passes radially through a casing arm (70a, 70b) of the turboprop.

6. A device according to any one of claims 1 to 5, wherein the connection arms (40a, 40b) are regularly distributed about the longitudinal axis (12).

7. A device according to any one of claims 1 to 6, wherein the set (24a, 24b) has ten fan blades (26) and the actuator (38) is mechanically connected to the synchronization ring by means of five connection arms (40a, 40b).

8. A two-propeller turboprop comprising a turbine (20) having two contrarotating rotors (22a, 22b) and two sets (24a, 24b) of adjustable-pitch fan blades (26) constrained to rotate with two rotary rings (28a, 28b) connected to respective ones of the rotors, the pitch of the fan blades of at least one of the sets being controlled by a device according to any one of claims 1 to 7.
